# FASCICULE DE BREVET EUROPEEN

(11) **EP 3 131 656 B1**
(45) Date de publication et mention de la délivrance du brevet: **30.10.2019**
(21) Numéro de dépôt: 15725744.5
(22) Date de dépôt: 15.04.2015
(51) Int. Cl.: B01D 45/08, B01D 45/16

(54) **FILTRAGE D'UN FLUX GAZ/PARTICULES**
FILTRIERUNG EINES STROMS AUS GAS/PARTIKELN
FILTERING OF A FLOW OF GAS/PARTICLES

(30) Priorité: 16.04.2014 FR 1453385
(43) Date de publication de la demande: 22.02.2017
(73) Titulaire: Safran Transmission Systems, 92700 Colombes (FR)
(72) Inventeur: BAUDUIN, Lionel, 77550 Moissy-Cramayel (FR); GUILLEMONT, Maxence, 77550 Moissy-Cramayel (FR); VIEL, Julien, 77550 Moissy-Cramayel (FR); PRUNERA-USACH, Stéphane, F-77750 Moissy-Cramayel (FR)
(74) Mandataire: Pichat, Thierry
(86) Numéro de dépôt international: PCT/FR2015/051028
(87) Numéro de publication internationale: WO 2015/159028

(56) Documents cités:
- EP-A1- 0 095 354
- WO-A1-2010/114377
- DE-A1-102007 048 321
- GB-A- 2 136 325
- US-A- 3 952 972
- US-A- 4 279 627
- US-A- 4 456 458
- US-A- 5 549 721

## Description

La présente invention se rapporte au domaine général des dispositifs et procédés permettant de séparer, ou filtrer, un gaz de particules solides ou liquides, telles que de l'huile, à partir d'un flux contenant un mélange gaz/particules. Un domaine particulier d'application de l'invention est celui des moteurs d'avion à turbine à gaz (turboréacteurs et turbopropulseurs).

Les moteurs d'avion à turbine à gaz comportent des enceintes contenant des roulements et des engrenages qui sont lubrifiés et refroidis par de l'huile. Afin d'éviter les fuites d'huile vers l'extérieur de ces enceintes, des joints sont disposés entre les parties tournantes et les parties fixes des enceintes, voire entre les parties tournantes elles-mêmes. Parmi les technologies de joints disponibles, ceux offrant la plus grande durée de vie sont les joints labyrinthes et les joints à brosse, le contact entre les pièces étant inexistant dans le premier cas et très limité dans le second.

Pour assurer une parfaite étanchéité d'enceintes munies de joints labyrinthes ou de joints à brosse, il est en revanche nécessaire de faire passer un débit d'air par les joints, ce débit d'air étant généralement prélevé sur un étage du compresseur du moteur. Le recours à un tel procédé implique de prévoir également des dispositifs séparant l'huile de l'air à évacuer à l'extérieur du moteur. De tels dispositifs - communément appelés déshuileurs - sont bien connus en soi. On pourra par exemple se référer aux documents EP 1582703, US 4,981,502 et US 6,033,450 qui décrivent différents types de déshuileurs centrifuges. Le document DE 10 2007 048321 décrit également un séparateur de particules d'un flux de gaz, comprenant des canaux concentriques.

Afin de fonctionner correctement, les déshuileurs de type centrifuge doivent tourner à des vitesses importantes, alors que le débit d'air et d'huile circule et est filtré à travers des mousses. Plus la vitesse de rotation de ces déshuileurs est importante, plus ces dernières génèrent des pertes de charges importantes. Comme les joints d'étanchéité des enceintes sont conçus pour fonctionner sous une différence de pression prédéfinie, quand le déshuileur génère une perte de charge plus importante, il est nécessaire d'augmenter la pression de prélèvement au niveau des compresseurs. Ce prélèvement à plus forte pression est néfaste pour le rendement du moteur, car l'air prélevé pour le fonctionnement des déshuileurs ne participe pas à la propulsion de la turbomachine, mais aussi pour le refroidissement des roulements et des engrenages car un prélèvement à plus forte pression implique un air prélevé à plus haute température. Par ailleurs, le débit d'air qui est prélevé sur un étage du compresseur est fonction du régime de fonctionnement du moteur, de sorte que le débit d'air minimal nécessaire pour assurer l'étanchéité des enceintes et le fonctionnement des déshuileurs est calculé sur la base de la phase de ralenti du moteur (cette phase correspond au régime de fonctionnement du moteur au cours duquel le débit d'air prélevé est le plus faible). Aussi, lors des autres phases de fonctionnement du moteur, et notamment à plein régime, le débit d'air traversant les joints des enceintes est surabondant par rapport à ce qui est suffisant pour assurer l'étanchéité des enceintes, ce qui engendre une surconsommation d'huile avec tous les effets néfastes que cela comporte (pollution, surcoût, etc.).

Par ailleurs, les déshuileurs centrifuges actuellement utilisés sont soumis à une intégration très spécifique et limitative dans la turbomachine, du fait de la présence de pièces tournantes devant être entrainées au sein des déshuileurs.

L'invention ici présentée permet d'apporter une solution efficace, facile à mettre en œuvre et économique aux inconvénients cités ci-dessus.

A cet effet, l'invention propose notamment un dispositif de filtrage d'un flux de gaz transportant des particules liquides ou solides, tel qu'un déshuileur, ledit dispositif comprenant :
- un canal d'écoulement du flux, comprenant un col prolongé par un élargissement vers l'aval,
- un canal collecteur ayant une ouverture amont agencée à l'intérieur du canal d'écoulement de manière à être sensiblement alignée avec le col dans son prolongement aval,
le canal collecteur et le canal d'écoulement étant configurés de manière que le débit autorisé à circuler dans le canal collecteur soit moins important que celui autorisé à circuler dans le canal d'écoulement, caractérisé
- en ce que des obstacles à l'écoulement des particules sont formés dans le canal d'écoulement en aval de l'ouverture amont du canal collecteur, les obstacles à l'écoulement des particules comprenant une chicane montée en travers du canal d'écoulement, la chicane comprenant plusieurs cloisons formées successivement à travers le canal d'écoulement et comprenant des ouvertures respectives non alignées, lesdites cloisons incluant une cloison intermédiaire formée au regard d'un conduit d'aspiration des particules débouchant dans le canal d'écoulement, et
- en ce que des moyens d'aspiration des particules sont agencés dans le canal collecteur, de telle sorte que le débit autorisé à circuler dans le canal collecteur soit :
   - égal au débit des particules seules dans le flux, et
   - inférieur au débit autorisé à circuler dans le canal d'écoulement en aval de l'ouverture amont du canal collecteur.

Afin de mieux comprendre le positionnement de l'ouverture amont de canal collecteur par rapport au col du canal d'écoulement, il est possible de décrire cette ouverture amont comme étant positionnée face à l'amont en regard du col, tout en se trouvant à l'intérieur de la partie élargie du canal d'écoulement.

Le dispositif de filtrage ci-avant est donc relativement simple de conception, de par sa structure, et parce qu'il ne nécessite aucune pièce tournante. Il est de plus relativement peu encombrant, et peut donc être intégré beaucoup plus facilement dans une turbomachine, par exemple, que les déshuileurs centrifuges de l'art antérieur. De plus, il fonctionne sans moyens filtrant de type mousse, ce qui réduit les pertes de charge occasionnées. Dans une turbomachine, il ne sera donc pas nécessaire de prélever une pression de prélèvement aussi élevée que pour des déshuileurs centrifuges au niveau des compresseurs.

Le fonctionnement du dispositif de filtrage préféré repose sur le principe suivant : le flux contenant l'air et les particules s'écoule à travers le canal d'écoulement jusqu'au col ; au niveau de l'élargissement du canal d'écoulement en aval du col, l'air contenu dans le flux, dont le comportement peut être assimilé à celui d'un fluide parfait, contourne principalement l'ouverture amont du canal collecteur et continue dans le canal d'écoulement. En effet, le dispositif de filtrage a été configuré de manière à autoriser la circulation d'un débit moindre dans le canal collecteur que dans le canal d'écoulement. On obtient cet effet par exemple en augmentant la résistance à l'écoulement dans le canal collecteur, ou en augmentant la pression statique en aval du canal collecteur, ou une combinaison des deux.

Les particules liquides ou solides contenues dans le flux possèdent une densité bien supérieure à celle de l'air, et possèdent donc une inertie supérieure à celle de l'air, inertie qui, du fait de la quantité de mouvement imprimée aux particules, les contraint à s'écouler principalement dans le prolongement géométrique du col en aval de celui-ci, malgré l'élargissement du canal d'écoulement. Ces particules ne contournent donc pas l'ouverture amont du canal collecteur, qui est agencée de manière à être sensiblement alignée dans le prolongement aval du col, mais s'y introduisent au contraire. Ainsi, les particules contenues dans le flux s'introduisent principalement dans le canal collecteur, alors que l'air de ce flux contourne principalement ce même canal collecteur afin de poursuivre dans le canal d'écoulement.

Le débit autorisé dans le canal collecteur sera donc préférentiellement défini de manière à correspondre exclusivement au débit des particules dans le flux. Ainsi, les particules ne s'accumuleront pas dans le canal collecteur, et l'air circulera intégralement en dehors du canal collecteur.

Dans un mode de réalisation particulier, le col du canal d'écoulement possède une section de taille inférieure ou égale à la section de l'ouverture amont du canal collecteur agencée dans son prolongement. On peut également dire que la section du col est incluse dans la section de l'ouverture amont du canal collecteur.

Le canal d'écoulement peut de plus présenter, en amont du col, un rétrécissement vers l'aval.

Grâce à cette caractéristique, on recrée le principe d'un tube venturi pour le canal d'écoulement. En amont du col, le flux est ainsi accéléré jusqu'au col, afin de conférer aux particules une quantité de mouvement plus importante à la sortie du col qu'en entrée dans le dispositif de filtrage. Dans ce cas, les particules seront ici projetées avec plus d'efficacité, sans avoir le temps de dévier, dans l'ouverture amont du canal collecteur.

Préférentiellement, les moyens d'aspiration des particules peuvent comprendre une pompe, et sont agencés dans le canal collecteur. Ainsi, il est facile, avec un choix approprié de caractéristiques de la pompe, de contraindre le débit autorisé à circuler dans le canal collecteur afin d'optimiser le dispositif de filtrage, comme expliqué plus haut.

Avantageusement, au moins une partie du canal d'écoulement est formé coaxialement autour du canal collecteur en aval de l'ouverture amont du canal collecteur. Dans cette configuration, l'air du flux qui continue principalement à circuler dans le canal découlement autour de l'ouverture amont du canal collecteur, n'est pas excessivement dévié de sa trajectoire par rapport à l'amont du col. La perte de charge occasionnée par le dispositif de filtrage s'en trouve ainsi réduite. On pourra également former le canal d'écoulement et le canal collecteur le long et autour d'un même axe longitudinal.

Selon un mode de réalisation particulier, des obstacles à l'écoulement des particules sont formés dans le canal d'écoulement en aval de l'ouverture amont du canal collecteur. Ainsi, les particules qui subsistent dans le canal d'écoulement en aval de l'ouverture amont du canal collecteur sont bloquées et la capacité de filtrage du dispositif est améliorée.

Préférentiellement, les obstacles à l'écoulement des particules comprennent une chicane montée en travers du canal d'écoulement. Cette chicane peut par exemple comprendre des cloisons formées successivement à travers le canal d'écoulement et comprenant des ouvertures respectives non alignées.

La chicane peut par ailleurs comprendre une cloison intermédiaire comportant des rainures concentriques de ruissellement des particules sur sa face amont, et étant formée au regard d'un conduit d'aspiration des particules débouchant dans le canal d'écoulement. Cette solution permet l'évacuation des particules de manière efficace au niveau de la chicane, sans que les particules puissent s'accumuler indésirablement dans le dispositif de filtrage.

L'invention concerne également une turbomachine qui comprend un dispositif de filtrage comme décrit ci-dessus, agencé dans un circuit d'acheminement d'un mélange air/huile.

Dans ce cas, le dispositif de filtrage peut être implanté dans un boitier d'entrainement des accessoires de la turbomachine, ou être formé de fonderie avec un carter de la turbomachine, et être relié :
- en entrée du canal d'écoulement à une enceinte de lubrification d'un roulement ou engrenage, et
- en sortie de canal collecteur à un circuit de récupération de l'huile.

Cette dernière solution est particulièrement intéressante car elle propose une solution d'intégration optimale sans faire intervenir de moyens de fixation supplémentaires. Il reste pertinent de noter que dans tous les cas, le dispositif de filtrage objet de cette demande de brevet présente des capacités d'intégration bien supérieures et polyvalentes que pour le déshuileur centrifuge de l'art antérieur.

Quant au procédé de filtrage d'un débit de gaz transportant, sur un parcours, des particules liquides ou solides, tel qu'ici conseillé, on aura compris de ce qui précède qu'il est tel que :
- on place sur ledit parcours un canal collecteur ayant une ouverture amont agencée à l'intérieur d'un canal d'écoulement, lequel comprend un col prolongé par un élargissement vers l'aval, de manière que ladite ouverture amont soit sensiblement alignée avec le col, suivant un prolongement aval,
- et on autorise à circuler dans le canal collecteur un dit débit moins important que celui que l'on autorise à circuler dans le canal d'écoulement, caractérisé
   - en ce qu'en travers du canal d'écoulement, en aval de l'ouverture amont du canal collecteur, est disposée une chicane comprenant plusieurs cloisons successives comprenant des ouvertures respectives non alignées, lesdites cloisons incluant une cloison intermédiaire formée au regard d'un conduit d'aspiration des particules débouchant dans le canal d'écoulement, et
   - en ce que des moyens d'aspiration des particules sont agencés dans le canal collecteur, de telle sorte que le débit autorisé à circuler dans le canal collecteur soit :
      - égal au débit des particules seules dans le flux, et
      - inférieur au débit autorisé à circuler dans le canal d'écoulement en aval de l'ouverture amont du canal collecteur.

Les différents aspects des solutions ici présentées seront mieux compris et d'autres détails, caractéristiques et avantages de celles-ci apparaîtront plus clairement à la lecture de la description qui suit faite à titre d'exemple non limitatif et en référence aux dessins annexés, dans lesquels :
- la figure 1 est une vue schématique en coupe du dispositif de filtrage ici conseillé ;
- la figure 2 est une vue schématique de face d'une paroi rainurée d'une chicane pouvant être intégrée audit dispositif de filtrage ;
- la figure 3 est une vue schématique en coupe de profil de la paroi rainurée représentée en figure 2 ;
- la figure 4 est une vue schématique d'une turbomachine dans laquelle le dispositif de filtrage ici conseillé peut s'intégrer.

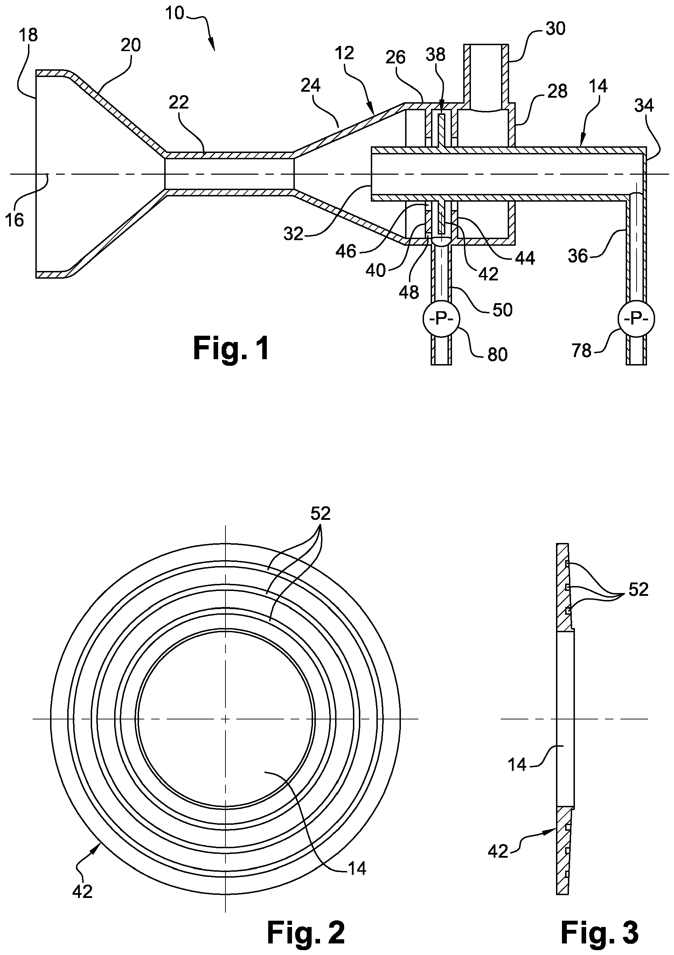

On se réfère tout d'abord à la figure 1 qui représente un dispositif de filtrage 10 de particules dans un flux, conforme à l'invention. Ce dispositif est particulièrement avantageux en ce qui concerne le filtrage d'huile à partir d'un flux comprenant de l'air et des gouttelettes d'huile.

Le dispositif comprend deux canaux 12, 14, l'un 12 d'écoulement du flux et l'autre 14 collecteur des particules pour filtrage.

Le canal collecteur 14 et le canal d'écoulement 12 définissent respectivement des premier et second passages calibrés, ou tronçons tubulaires, le premier d'entre eux étant adapté à y permettre un débit de fluide moins important que celui permis dans le second.

Le canal d'écoulement 12 est ici intégralement de section circulaire et s'étend le long d'un axe droit 16. Cependant, ces aspects ne sont pas limitatifs quant au fonctionnement du dispositif, ce qui implique que la section du canal d'écoulement 12 pourrait être de forme quelconque et son extension non linéaire.

Le canal d'écoulement 12 comprend une ouverture amont 18 dans laquelle est introduit le flux d'air et de particules, telles que solides ou liquides, à un débit et une vitesse prédéfinis. En aval de cette ouverture 18, le canal d'écoulement 12 présente une réduction de section progressive 20 de l'amont vers l'aval, c'est-à-dire en entonnoir 20 vers l'aval. La réduction de section débouche directement en aval sur une portion cylindrique 22 du canal d'écoulement, qui possède donc une section plus réduite que celle de l'ouverture amont 18. Cette dernière portion cylindrique 22 débouche directement en aval sur une portion de canal 24 présentant une augmentation de section progressive vers l'aval, c'est-à-dire évasée vers l'aval. Cette portion évasée 24 du canal d'écoulement est reliée à l'aval à une portion cylindrique 26, qui est donc de section plus importante que la portion cylindrique 22, qu'on appellera col 22, située entre la portion en entonnoir 20 et la portion évasée 24. La longueur du col 22 peut varier, et même être ponctuelle dans certains cas. La portion cylindrique large aval 26 est, dans le cas représenté dans la figure 1, cloisonnée à son extrémité aval 28, et reliée à un canal d'évacuation 30 perpendiculaire non loin de cette cloison 28.

Un canal collecteur 14, cylindrique dans le cas ici représenté, est agencé coaxialement et intérieurement au canal d'écoulement 12, en aval du col 22. La section de ce canal collecteur 14 est préférentiellement plus grande que la section du col 22, et plus petite que la section de la portion cylindrique large aval 26 du canal d'écoulement 12. Le canal collecteur 14 est ouvert à son extrémité amont 32, cette ouverture 32 faisant face, ou étant formée en regard du col 22 plus en amont. Dans la figure 1, cette ouverture amont 32 est formée au niveau de la portion évasée 24 du canal d'écoulement 12. Le canal collecteur 14 s'étend donc vers l'aval à l'intérieur et coaxialement au canal d'écoulement 12, et traverse la cloison 28 d'extrémité aval du canal d'écoulement 12. L'extrémité aval 34 du canal collecteur est cloisonnée, et un conduit d'aspiration 36 débouche dans le canal collecteur 14 au niveau de cette extrémité aval 34. Le conduit d'aspiration 36 est relié en aval à une pompe 78 régulant le débit d'aspiration.

Trois cloisons transverses successives 40, 42, 44, formant chicane 38, sont formées à travers le canal d'écoulement 12, au niveau de la portion cylindrique large aval 26 du canal d'écoulement 12, en aval de l'ouverture amont 32 du canal collecteur 14. Les deux cloisons 40, 44 amont et aval s'étendent vers l'intérieur à partir de la paroi du canal d'écoulement 12, et possèdent chacune une ouverture cylindrique 46 en son milieu laissant un espace cylindrique interne d'écoulement entre elle-même et la paroi du canal collecteur 14. La cloison amont 40 possède en plus au moins une ouverture 48 sur sa partie externe. La deuxième cloison 42, intermédiaire, s'étend vers l'extérieur à partir de la paroi du canal collecteur 14, tout en laissant un espace cylindrique externe d'écoulement entre elle-même et la paroi du canal d'écoulement 12. Des moyens d'aspiration 50 débouchent dans le canal collecteur en regard de cette cloison intermédiaire 42, entre les cloisons transverses 40, 44 amont et aval. Ces moyens d'aspiration 50 sont reliés en aval à une pompe 80 régulant le débit d'aspiration. La chicane 38 peut également être formée de plus de trois cloisons transverses, du moment que le motif d'alternance des cloisons tel que présenté ci-dessus est respecté.

En fonctionnement, le flux contenant air et particules entre dans le canal d'écoulement 12 par son ouverture amont 18. Le flux est accéléré dans la portion en entonnoir 20 et acquiert sa vitesse maximale au niveau du col 22, qui a la section la plus petite du canal d'écoulement 12. En sortie du col 22, au niveau de la portion évasée 24 ou se trouve l'ouverture amont 32 du canal collecteur 14, l'air et les particules du flux présentent des comportements respectifs différents.

A la sortie du col 22, l'air adopte le comportement d'un fluide parfait et s'écoule en partie dans la continuité du canal d'écoulement 12 et en partie dans le canal collecteur 14, en fonction des pressions aval et des pertes de charge respectives de ces canaux. On configure ces paramètres, en choisissant la pompe 78 de manière à ce que le débit autorisé à circuler dans le canal collecteur 14 soit sensiblement égal au débit des particules seules du flux, et dans tous les cas inférieur au débit autorisé à circuler dans le canal d'écoulement 12 en aval de l'ouverture amont 32 du canal collecteur 14. L'air s'écoule donc majoritairement en aval dans le canal d'écoulement 12, par rapport au canal collecteur 14, et est évacué par le canal d'évacuation 30 aval.

Les particules, quant à elles, adoptent un comportement conforme à la mécanique classique des solides, et possèdent donc une inertie. Ainsi, la quantité de mouvement conférée aux particules en sortie du col 22, après accélération à travers la portion en entonnoir 20, les entraine par inertie dans le prolongement de leur direction de déplacement en sortie du col 22, c'est-à-dire dans le cas ici représenté dans le prolongement cylindrique du col 22. Comme l'ouverture amont 32 du canal collecteur 14 est formée autour de ce prolongement cylindrique du col 22, les particules s'introduisent dans le canal collecteur 14. On configurera donc le dispositif afin que les particules aient une vitesse suffisante pour qu'elles n'aient pas le temps d'être déviées, par l'air, autour de l'ouverture amont 32 du canal collecteur 14. Comme le débit autorisé dans le canal collecteur 14 correspond sensiblement au débit des particules seules du flux, les particules vont s'écouler dans le canal collecteur 14 et être aspirées par le conduit d'aspiration d'aval 36.

Dans le cas où des particules subsistent dans le canal d'écoulement 12 en aval de l'ouverture amont 32 du canal collecteur, la chicane 38 pourra intercepter ces particules, qui se déposeront entre les cloisons amont 40 et aval 44 de la chicane et seront aspirées par les moyens d'aspiration 50 à l'aide de la pompe 80.

Il est à noter que les pompes 78 et 80 peuvent être une seule et même pompe, à laquelle sont reliés les moyens d'aspiration 36 et 50. Cela ne modifie pas le fonctionnement du dispositif.

On se réfère maintenant aux figures 2 et 3 qui représentent plus en détails la cloison intermédiaire 42 de la chicane 38.

La cloison intermédiaire 42 comprend sur sa face amont des rainures circulaires concentriques 52. De plus, la portion annulaire de cloison 42 à l'extérieur de chaque rainure 52 est plus fine que la portion annulaire de cloison à l'intérieur de cette même rainure. Ainsi, en fonctionnement, les particules interceptées par cette cloison 42 s'écoulent vers l'extérieur du canal d'écoulement 12 et les moyens d'aspiration 50, par exemple par gravité, circonférentiellement le long de ces rainures 52 en partie haute du dispositif 10, et radialement vers les moyens d'aspiration 50 en partie basse du dispositif.

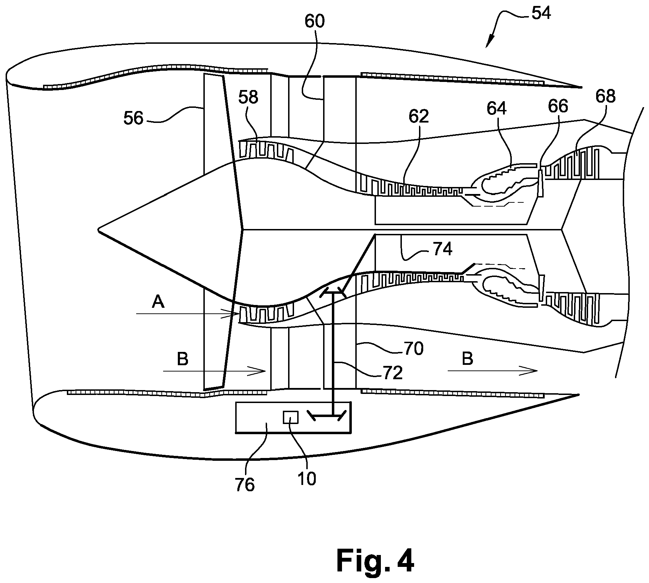

On se réfère maintenant à la figure 4, qui représente une turbomachine 54 dans laquelle peut s'intégrer le dispositif de filtrage afin de répondre aux contraintes de fonctionnement citées plus haut. La turbomachine comprend d'amont en aval une soufflante 56, un compresseur basse pression 58, un carter intermédiaire 60, un compresseur haute pression 62, une chambre de combustion 64, une turbine haute pression 66 et une turbine basse pression 68. L'air entrant dans la turbomachine 54 se divise en un flux d'air primaire (flèche A) qui circule à l'intérieur des compresseurs 58, 62 basse et haute pression vers la chambre de combustion 64 puis à travers les turbines 66, 68 haute et basse pression et en un flux d'air secondaire (flèches B) qui contourne le compresseur, la chambre de combustion et la turbine.

Le carter intermédiaire 60 comprend des bras structuraux 70 s'étendant radialement vers l'extérieur. Un des bras 70 du carter intermédiaire 60 contient un arbre radial 72 dont l'extrémité interne est reliée par un couple de pignons coniques à l'arbre d'entraînement 74 du compresseur haute pression. L'extrémité radialement externe de l'arbre radial 72 est reliée par un autre couple de pignons coniques à l'entrée d'une boîte d'engrenages 76, comportant des pignons d'entraînement d'une pluralité d'équipements accessoires, tels que par exemple, une pompe à huile, une pompe hydraulique, une pompe à carburant, un démarreur et un générateur électrique. Les différents équipements décrits ci-dessus laissent apparaitre de nombreux roulements compris dans des enceintes, qui doivent être lubrifiées par de l'huile et mises sous pression, comme il a été décrit au début de cette demande de brevet. Il existe donc une nécessité, après lubrification, de filtrer un flux d'air et d'huile en sortie de ces enceintes.

Grâce à sa simplicité structurelle, il sera soit possible d'intégrer le dispositif de filtrage 10 au niveau du boitier d'entrainement 76 des accessoires, soit de le former d'une seule pièce avec les différents carters de la turbomachine, soit de l'intégrer au voisinage d'un arbre d'entrainement de la turbomachine. Ce dispositif sera aisément relié à la sortie des enceintes de lubrification, afin de filtrer l'huile du flux sortant.

## Revendications

1. Dispositif de filtrage (10) d'un débit de gaz transportant des particules liquides ou solides, ledit dispositif comprenant :
- un canal d'écoulement (12) du flux, comprenant un col (22) prolongé par un élargissement (24) vers l'aval,
- un canal collecteur (14) ayant une ouverture amont (32) agencée à l'intérieur du canal d'écoulement (12) de manière à être sensiblement alignée avec le col (22) dans son prolongement aval,
le canal collecteur (14) et le canal d'écoulement (12) étant configurés de manière que le débit autorisé à circuler dans le canal collecteur soit moins important que celui autorisé à circuler dans le canal d'écoulement, **caractérisé**
- **en ce que** des obstacles (38) à l'écoulement des particules sont formés dans le canal d'écoulement (12) en aval de l'ouverture amont (32) du canal collecteur (14), les obstacles (38) à l'écoulement des particules comprenant une chicane montée en travers du canal d'écoulement (12), la chicane comprenant plusieurs cloisons (40,42,44) formées successivement à travers le canal d'écoulement (12) et comprenant des ouvertures respectives non alignées, lesdites cloisons (40,42,44) incluant une cloison intermédiaire (42) formée au regard d'un conduit d'aspiration (50) des particules débouchant dans le canal d'écoulement (12), et
- **en ce que** des moyens d'aspiration (36) des particules sont agencés dans le canal collecteur (14), de telle sorte que le débit autorisé à circuler dans le canal collecteur (14) soit :
- égal au débit des particules seules dans le flux, et
- inférieur au débit autorisé à circuler dans le canal d'écoulement (12) en aval de l'ouverture amont (32) du canal collecteur (14).

2. Dispositif de filtrage selon la revendication 1, **caractérisé en ce qu'**une section du col (22) du canal d'écoulement (12) est incluse dans une section de l'ouverture amont (32) du canal collecteur (14) agencée dans son prolongement.

3. Dispositif de filtrage selon l'une des revendications 1 ou 2, **caractérisé en ce que** le canal d'écoulement (12) présente, en amont du col (22), un rétrécissement (20) vers l'aval.

4. Dispositif de filtrage selon l'une des revendications 1 à 3, **caractérisé en ce que** les moyens d'aspiration (36) des particules comprennent une pompe (78).

5. Dispositif de filtrage selon l'une des revendications précédentes, **caractérisé en ce qu'**au moins une partie du canal d'écoulement (12) est formé coaxialement autour du canal collecteur (14) en aval de l'ouverture amont (32) du canal collecteur.

6. Dispositif de filtrage selon l'une des revendications précédentes, **caractérisé en ce que** la cloison intermédiaire (42) comporte des rainures concentriques (52) de ruissellement des particules sur sa face amont.

7. Turbomachine (54), telle qu'un turboréacteur ou un turbopropulseur, **caractérisée en ce qu'**elle comprend un dispositif de filtrage (10) selon l'une des revendications précédentes, agencé dans un circuit d'acheminement d'un mélange air/huile, de sorte que les particules transportées dans ledit débit de gaz comprennent des gouttelettes d'huile.

8. Turbomachine (10) selon la revendication 7, **caractérisée en ce que** le dispositif de filtrage est implanté dans un boitier d'entrainement des accessoires (76) de la turbomachine, ou est formé de fonderie avec un carter de la turbomachine, et est relié :
- en entrée du canal d'écoulement (12) à une enceinte de lubrification d'un roulement ou engrenage, et
- en sortie de canal collecteur (14) à un circuit de récupération d'huile.

9. Procédé de filtrage d'un débit de gaz transportant, sur un parcours, des particules liquides ou solides, ledit procédé étant tel que :
- on place sur ledit parcours un canal collecteur (14) ayant une ouverture amont (32) agencée à l'intérieur d'un canal d'écoulement (12), lequel comprend un col (22) prolongé par un élargissement (24) vers l'aval, de manière que ladite ouverture amont (32) soit sensiblement alignée avec le col (22), suivant un prolongement aval,
- et on autorise à circuler dans le canal collecteur un dit débit moins important que celui que l'on autorise à circuler dans le canal d'écoulement, **caractérisé**
- **en ce qu'**en travers du canal d'écoulement (12), en aval de l'ouverture amont (32) du canal collecteur (14), est disposée une chicane comprenant plusieurs cloisons (40,42,44) successives comprenant des ouvertures respectives non alignées, lesdites cloisons (40,42,44) incluant une cloison intermédiaire (42) formée au regard d'un conduit d'aspiration (50) des particules débouchant dans le canal d'écoulement (12), et
- **en ce que** des moyens d'aspiration (36) des particules sont agencés dans le canal collecteur (14), de telle sorte que le débit autorisé à circuler dans le canal collecteur (14) soit :
- égal au débit des particules seules dans le flux, et
- inférieur au débit autorisé à circuler dans le canal d'écoulement (12) en aval de l'ouverture amont (32) du canal collecteur (14).

## Patentansprüche

1. Filtervorrichtung (10) zum Filtern eines Gasdurchsatzes, der flüssige oder feste Partikel mitführt, wobei die Vorrichtung enthält:
- einen Strömungskanal (12) für die Strömung, der einen Kragen (22) aufweist, der von einer stromabwärts gerichteten Erweiterung (24) verlängert wird,
- einen Sammelkanal (14) mit einer stromaufwärtigen Öffnung (32), die innerhalb des Strömungskanals (12) so angeordnet ist, dass sie im Wesentlichen mit dem Kragen (22) in seiner stromabwärtigen Verlängerung fluchtend ausgerichtet ist,
wobei der Sammelkanal (14) und der Strömungskanal (12) dazu ausgelegt sind, dass der zum Durchfluss im Sammelkanal berechtigte Durchsatz geringer ist als der zum Durchfluss im Strömungskanal berechtigte Durchsatz,
**dadurch gekennzeichnet, dass**
- Hindernisse (38) für die Strömung der Partikel in dem Strömungskanal (12) stromabwärts der stromaufwärtigen Öffnung (32) des Sammelkanals (14) ausgebildet sind, wobei die Hindernisse (38) für die Strömung der Partikel ein Prallblech umfassen, das quer zu dem Strömungskanal (12) angebracht ist, wobei das Prallblech mehrere Trennwände (40, 42, 44) enthält, die nacheinander durch den Strömungskanal (12) hindurch ausgebildet sind und jeweilige nicht fluchtend ausgerichtete Öffnungen aufweisen, wobei die Trennwände (40, 42, 44) eine Zwischenwand (42) umfassen, die einer Saugleitung (50) für die Partikel gegenüberliegend ausgebildet, welche in den Strömungskanal (12) mündet, und
- Partikelabsaugeinrichtungen (36) im Sammelkanal (14) so angeordnet sind, dass der zum Durchfluss im Sammelkanal (14) berechtigte Durchsatz
- gleich dem Durchsatz der Partikel allein in der Strömung ist, und
- geringer als der zum Durchfluss im Strömungskanal (12) berechtigte Durchsatz stromabwärts der stromaufwärtigen Öffnung (32) des Sammelkanals (14) ist.

2. Filtervorrichtung nach Anspruch 1, **dadurch gekennzeichnet, dass** ein Abschnitt des Kragens (22) des Strömungskanals (12) in einem Abschnitt der stromaufwärtigen Öffnung (32) des Sammelkanals (14) enthalten ist, der in dessen Verlängerung angeordnet ist.

3. Filtervorrichtung nach einem der Ansprüche 1 oder 2, **dadurch gekennzeichnet, dass** der Strömungskanal (12) dem Kragen (22) vorgelagert eine Verjüngung (20) in Richtung stromabwärts aufweist.

4. Filtervorrichtung nach einem der Ansprüche 1 bis 3, **dadurch gekennzeichnet, dass** die Partikelabsaugeinrichtungen (36) eine Pumpe (78) enthalten.

5. Filtervorrichtung nach einem der vorangehenden Ansprüche, **dadurch gekennzeichnet, dass** zumindest ein Teil des Strömungskanals (12) koaxial um den Sammelkanal (14) stromabwärts der stromaufwärtigen Öffnung (32) des Sammelkanals ausgebildet ist.

6. Filtervorrichtung nach einem der vorangehenden Ansprüche, **dadurch gekennzeichnet, dass** die Zwischenwand (42) konzentrische Nuten (52) für das Abfließen von Partikeln auf ihrer stromaufwärtigen Seite enthält.

7. Turbotriebwerk (54), wie etwa Turbostrahltriebwerk oder Turboprop-Triebwerk, **dadurch gekennzeichnet, dass** es eine Filtervorrichtung (10) nach einem der vorangehenden Ansprüche enthält, die in einem Leitungskreis für ein Luft-/Öl-Gemisch angeordnet ist, so dass die in dem Gasdurchsatz mitgeführten Partikel Öltröpfchen aufweisen.

8. Turbotriebwerk (10) nach Anspruch 7, **dadurch gekennzeichnet, dass** die Filtervorrichtung in einem Antriebsgehäuse für Zubehörteile (76) des Turbotriebwerks eingebaut oder durch Gießen mit einem Gehäuse des Turbotriebwerks ausgebildet ist und
- am Einlass des Strömungskanals (12) mit einer Schmierkammer für ein Lager oder Getriebe und
- am Auslass des Sammelkanals (14) mit einem Ölrückgewinnungskreis verbunden ist.

9. Verfahren zum Filtern eines Gasdurchsatzes, der über einen Strömungspfad flüssige oder feste Partikel mitführt, wobei das Verfahren derart ist, dass:
- in den Strömungspfad ein Sammelkanal (14) mit einer stromaufwärtigen Öffnung (32) eingesetzt wird, die innerhalb eines Strömungskanals (12) angeordnet ist, der einen Kragen (22) enthält, welcher von einer stromabwärts gerichteten Erweiterung (24) verlängert wird, so dass die stromaufwärtige Öffnung (32) mit dem Kragen (22) entlang seiner stromabwärtigen Verlängerung im Wesentlichen fluchtend ausgerichtet ist,
- ein Durchsatz zum Durchfluss im Sammelkanal berechtigt wird, der geringer ist als der zum Durchfluss im Strömungskanal berechtigte Durchsatz,
**dadurch gekennzeichnet, dass**
- quer zu dem Strömungskanal (12) stromabwärts der stromaufwärtigen Öffnung (32) des Sammelkanals (14) ein Prallblech angeordnet wird, das mehrere aufeinanderfolgende Trennwände (40, 42, 44) enthält, die jeweilige, nicht fluchtend ausgerichtete Öffnungen aufweisen, wobei die Trennwände (40, 42, 44) eine Zwischenwand (42) umfassen, die einer Saugleitung (50) für die Partikel gegenüberliegend ausgebildet ist, welche in den Strömungskanal (12) mündet, und
- Partikelabsaugeinrichtungen (36) in den Sammelkanal (14) angeordnet so sind, dass der zum Durchfluss im Sammelkanal (14) berechtigte Durchsatz
- gleich dem Durchsatz der Partikel allein in der Strömung ist, und
- geringer als der zum Durchfluss im Strömungskanal (12) berechtigte Durchsatz stromabwärts der stromaufwärtigen Öffnung (32) des Sammelkanals (14) ist.

## Claims

1. A device (10) for filtering a flow of gas conveying liquid or solid particles, said device comprising:
- a flow channel (12) comprising a neck (22) extended by an enlargement (24) in the downstream direction,
- a recovery channel (14) having an upstream opening (32) arranged inside the flow channel (12) so as to be substantially aligned with the neck (22) in the downstream extension thereof,
with the recovery channel (14) and the flow channel (12) being so configured that the flow allowed to circulate in the recovery channel is less than the one allowed to circulate in the flow channel,
**characterized**
- **in that** obstacles (38) to the flowing of particles are formed in the flow channel (12) downstream from the upstream opening (32) of the recovery channel (14), the obstacles (38) to the flowing of particles comprise a buffer mounted across the flow channel (12), the buffer comprising several walls (40,42,44) successively formed through the flow channel (12) and comprising respective not aligned openings, said walls (40,42,44) including intermediate wall (42) formed opposite a duct (50) for the suction of the particles opening into the flow channel (12), and
- **in that** particles suction means (36) are arranged in the recovery channel (14), by so the flow rate allowed to circulate in the recovery channel (14) is:
- equal to the flow rate of the particles alone in the flow, and
- lower than the flow rate allowed to circulate in the flow channel (12) downstream from the upstream opening (32) of the recovery channel (14).

2. The filtering device according to claim 1, **characterized in that** one section of the neck (22) of the flow channel (12) is included in a section of the upstream opening (32) of the recovery channel (14) arranged in the extension thereof.

3. The filtering device according to one of claims 1 or 2, **characterized in that** the flow channel (12) has, upstream from the neck (22), a throat (20) in the downstream direction.

4. The filtering device according to one of claims 1 to 3, **characterized in that** the particles suction means (36) comprise a pump (78).

5. The filtering device according to one of the preceding claims, **characterized in that** at least a portion of the flow channel (12) is formed coaxially around the recovery channel (14), downstream from the upstream opening (32) of the recovery channel.

6. The filtering device according to one of the preceding claims, **characterized in that** the intermediate wall (42) comprises concentric grooves (52) for the run-off of the particles on the upstream face thereof.

7. The turbine engine (54), such as a turbojet engine or a turboprop engine, **characterised in that** it comprises a filtering device (10) according to one of the preceding claims, arranged in an air/oil mixture routing circuit, so that the particles carried in said gaz flow comprise oil droplets.

8. The turbine engine (10) according to claim 7, **characterized in that** the filtering device is positioned in a box driving the accessories (76) of the turbine engine, or is cast with a case of the turbine engine, and is connected:
- at the inlet of the flow channel (12), to a bearing or a gear lubrication enclosure, and
- at the outlet of the recovery channel (14) to an oil collecting circuit.

9. The method for filtering a flow of gas conveying liquid or solid particles along a path, with said method being such that:
- on said path is placed a recovery channel (14) having an upstream opening (32) arranged inside a flow channel (12) which comprises a neck (22) extended by an enlargement (24) in the downstream direction, so that said upstream opening (32) is substantially aligned with the neck (22), along a downstream extension thereof,
- and is allowed to circulate, in the recovery channel, a flow which is less than the one allowed to circulate in the flow channel,
**characterized**
- **in that** across the flow channel (12), downstream from the upstream opening (32) of the recovery channel (14), is disposed a buffer comprising several successive walls (40,42,44) comprising respective not aligned openings, said walls (40,42,44) including intermediate wall (42) formed opposite a duct (50) for the suction of the particles opening into the flow channel (12), and
- **in that** particles suction means (36) are arranged in the recovery channel (14), by so the flow rate allowed to circulate in the recovery channel (14) is:
- equal to the flow rate of the particles alone in the flow, and
- lower than the flow rate allowed to circulate in the flow channel (12) downstream from the upstream opening (32) of the recovery channel (14).
